# EUROPEAN PATENT SPECIFICATION

(11) **EP 1 519 536 B1**
(45) Date of publication and mention of the grant of the patent: **27.03.2013**
(21) Application number: 04255722.3
(22) Date of filing: 21.09.2004
(51) Int. Cl.: H04L 29/06

(54) **Home network device, home network system and method for automating take ownership process**
Heimnetzwerkvorrichtung, Heimnetzwerksystem und Verfahren zum Automatisieren eines "TakeOwnership" Prozesses
Dispositif de réseau domotique, système de réseau domotique et procédé pour automatiser une procédure "TakeOwnership"

(30) Priority: 29.09.2003 KR 2003067408
(43) Date of publication of application: 30.03.2005
(73) Proprietor: Samsung Electronics Co., Ltd., Suwon-si, Gyeonggi-do, 443-742 (KR)
(72) Inventor: Lee, Sung-min, Seocho-gu Seoul (KR); Yook, Hyun-gyoo, Seocho-gu Seoul (KR)
(74) Representative: Grootscholten, Johannes A.M.

(56) References cited:
- WO-A1-03/013172
- GB-A- 2 378 098

## Description

The present invention relates generally to a home network device, a home network system and a method for automating a TakeOwnership process.

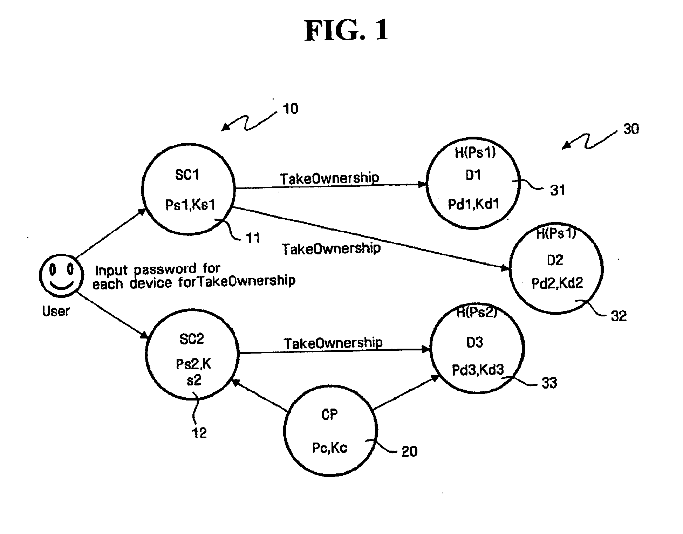

Figure 1 illustrates a conventional password-based TakeOwnership process. At least one security console 10, a control point (CP) 20 and at least one device (D) 30 are involved in the TakeOwnership process, wherein the security console is adapted to allow a user to establish his ownership for the device, the control point controls the device, and the device provides contents and functions as a server.

To begin with, with respect to the TakeOwnership process, the security console 10, the control point 20 and the device 30 inherently store therein respective public key pairs when they were manufactured by manufacturers. Especially, on the device 30 is recorded an accessible password for the TakeOwnership process, and the password is informed to a purchaser who has bought the device.

After purchase, the purchaser or user connects the device 30 to a home network, and registers his ownership for the device 30 using the security console 10. Here, the user directly inputs password information into the security console, and then the input password information is transmitted to the device 30. The device 30 verifies the transmitted password information and then implements the TakeOwnership process.

Next, the security console 10 takes ownership for the device 30 as a result of implementing the TakeOwnership process. Specifically, when the user has one or more security consoles 10 in his/her home for the sake of convenience, one of the security consoles 10 may take ownership for new devices 31, 32 and 33, and each device has a hash value for the public key of the security console which has an authority to edit an access control list (hereinafter referred to as an "ACL") of the new devices. In other words, in the process of implementing the TakeOwnership process, if a password represented through a specific security console is valid, the device 30 calculates the hash value for the public key of the security console, and stores the calculated hash value in order to certify which owner has an authority to edit the ACL of the new devices.

However, there are problems in that the user suffers from inconvenience in manually inputting passwords so as to take ownership for each device, and that when the user wants to use a plurality of security consoles, the user needs to purchase a corresponding number of equipment. When the plurality of security consoles are used, corresponding different keys must be used, so the user needs to remember the corresponding relationship between the devices and the security consoles in implementing the TakeOwnership process.

In other words, because the conventional password-based authentication method is vulnerable to a Brute Force Attack, and because the public key of the security console is transmitted together with a digital signature, it is difficult to confirm authenticity of the public key of the security console. Also, it may not be possible to authenticate a message sender. Further, there is an inconvenience that in order to set an access control for specific devices, the user has not only to remember the security console having the authority to edit the ACL of the specific devices, but also to manually input passwords provided by the manufacturer into each device through the security console so as to implement the TakeOwnership process.

The document GB 2 378 098 presents a system and method in which SIM cards in mobile terminals of a wireless radio communications network are initially registered with a Home network using information supplied by the SIM card supplier, either at the moment of terminal purchase or previously. The SIM cards of this invention may be re-registered with a different Home network, a predetermined number of times. All the data necessary for all registration configurations may be already stored on the SIM, thus reducing the likelihood of sensitive information being broad cast during the re-registration.

Accordingly, the present invention is made to address the above-mentioned problems occurring in the related art, but embodiments of the present invention are not required to solve any of the specific problems described herein. An exemplary objective of the present invention is to provide a home network device, a home network system and a method for automating a TakeOwnership process, which are capable of securely operating home network equipment by employing public key cryptography and of automatically implementing the TakeOwnership process.

It is another exemplary objective of the present invention to provide a home network device, a home network system and a method for automating a TakeOwnership process, in which a control point can simultaneously perform a security console function by which the control point has an authority for access to at least one controlled device.

According to the present invention there is provided an apparatus and method as set forth in the appended claims. Preferred features of the invention will be apparent from the dependent claims, and the description which follows.

The present invention relates more particularly to a home network device, a home network system and a method for automating a TakeOwnership process, wherein a user may use home network equipment securely by employing public key cryptography and the home network and system are capable of authenticating the ownership thereof by performing an automatic TakeOwnership process by using a pair of public keys stored on a secure storage medium as a pair of public keys of a security console (SC).

Consistent with an exemplary embodiment of the present invention, there is provided a network device for automating a TakeOwnership process, which comprises a public key generation unit, a storage medium write/read unit and a control point/security console (CP/SC) switching unit. The public key generation unit generates a public key and a private key by employing public key cryptography. The storage medium write/read unit is for writing the generated public and private keys on a storage medium and for reading the public and private keys written on the storage medium. The control point/security console (CP/SC) switching unit selects any one of a security console function and a control point function after authentication of a user using the private key stored on the storage medium, wherein the security console function provides an access authority for a predetermined device and the control point function controls operation of the predetermined device.

Consistent with another exemplary embodiment of the present invention, there is provided a network device for automating a TakeOwnership process. The network device comprises a storage medium read unit for reading a first public key generated in a control point from a storage medium, and a public key and digital signature authentication unit for comparing a second public key transmitted from the control point with the first public key and for authenticating a digital signature transmitted from the control point using a result of the comparison.

Consistent with a further exemplary embodiment of the present invention, there is provided a home network system for automating a TakeOwnership process. The home network system comprises a control point for generating a public key and a private key and for performing a security console function of providing an access authority for a controlled device by use of the public key, and the controlled device for permitting an access to itself after authentication by use of the public key.

Consistent with a still further exemplary embodiment of the present invention, there is provided a method for automating a TakeOwnership process, the method comprising a) at a control point, generating a public key and a private key and writing the generated public and private keys on a storage medium, b) at the control point, reading again the storage medium after the public key is transmitted to a controlled device, c) authenticating a user using the private key stored on the storage medium, and d) when the result of authenticating confirms that the user is eligible, switching into a security console function.

Consistent with yet another exemplary embodiment of the present invention, there is provided a method for automating a TakeOwnership process. The method comprising
a) reading a storage medium storing a first public key generated by a control point and storing the read result,
b) receiving a second public key and a digital signature from the control point, c) verifying the received second public key and the digital signature, and d) permitting an access to a controlled device when the second public key and the digital signature are verified.

The above and other exemplary objects, features and advantages of the present invention will be more apparent from the following detailed description taken in conjunction with the accompanying drawings, in which:
Figure 1 shows a conventional password-based TakeOwnership process;
Figure 2 schematically shows a home network system for automating a TakeOwnership process according to an exemplary embodiment of the present invention;
Figure 3 shows an initialization process for generation and distribution of keys according to an exemplary embodiment of the present invention;
Figure 4 shows a switching process of a security console function according to another exemplary embodiment of the present invention;
Figure 5 shows a process of authenticating and taking ownership according to a further exemplary embodiment of the present invention; and
Figure 6 shows a method for automating a TakeOwnership process according to a still further exemplary exemplary of the present invention.

Hereinafter, exemplary, non-limiting embodiments of the present invention will be described with reference to the accompanying drawings.

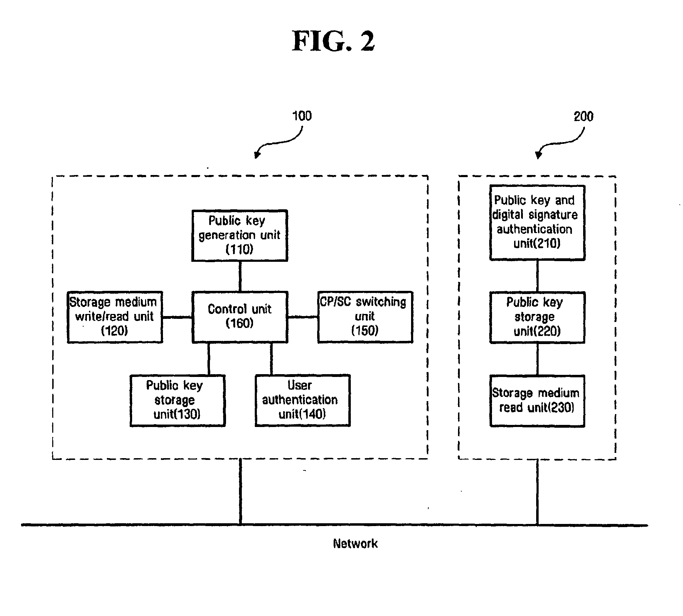

Figure 2 schematically illustrates a home network system for automating a TakeOwnership process according to an exemplary embodiment of the present invention. The home network system comprises a control point 100 and at least one controlled device 200. The control point 100 includes a public key generation unit 110, a storage medium write/read unit 120, a public key storage unit 130, a user authentication unit 140, a control point/security console (CP/SC) switching unit 150 and a control unit 160. The controlled device 200 includes a public key and digital signature authentication unit 210, a public key storage unit 220 and a storage medium read unit 230.

The public key generation unit 110 of the control point 100 generates a public key (Ps) and a private key (Ks) by employing public key cryptography. Here, the private or secret key is encrypted by a user's password. The public key generated by the public key generation unit 110 is stored in the control point 100 and the controlled device 200 by use of the storage medium. Hereinafter, a "first public key" refers to the public key which the public key generation unit 110 generates and stores in the control point 100 and the controlled device 200, and a "second public key" refers to the public key which is transmitted to the controlled device 200 by the control point 100 for verification in the future.

The storage medium write/read unit 120 writes the public key and the private key generated from the public key generation unit 110 on a storage medium, and reads the public key and the private key from the storage medium. The storage medium may comprise a smart card; alternatively, it may comprise other portable storage medium.

The CP/SC switching unit 150, after implementing a user authentication by use of a private key stored on the storage medium, can select either a security console function or a control point function. The security console function provides an authority to access a specific device and the control point function controls operation of the specific device. The public key storage unit 130 of the control point 100 stores the public key generated from the public key generation unit 110. Here, the public key is used to verify a digital signature created with the private key when the user is authenticated. The user authentication unit 140 creates the digital signature by use of the private key stored on the storage medium, and verifies the digital signature by use of the public key stored on the storage medium.

The storage medium read unit 230 reads the first public key generated in the control point 100 from the storage medium.

The public key storage unit 220 of the controlled device 200 stores the first public key generated from the public key generation unit 110. The first public key is used to verify the security console.

The public key and digital signature authentication unit 210 authenticates the second public key and the digital signature which are received from the control point 100 using the first public key. The public key and digital signature authentication unit 210 permits the control point 100 to access the device so that the control point 100 can edit an access control list (ACL) of its devices (here, the control point functions as a security console).

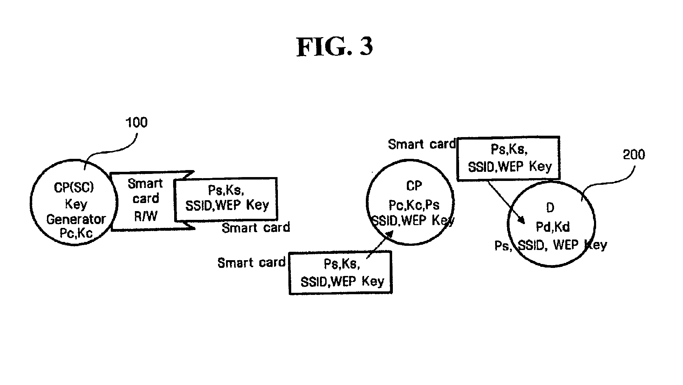

Figure 3 shows an initialization process for generation and distribution of keys in accordance with an exemplary embodiment of the present invention. A user who purchases at least one new device generates a public key pair of an administrator by use of the public key generation unit 110 and stores the public key pair on a smart card, so as to automatically transmit the public key pair (public key and private key) and security information in the home network. Here, the private key is encrypted using a password of the administrator and is stored on the smart card. Alternatively, information such as SSID or WEP Key can be generated and stored on the smart card for establishment under a wireless environment.

Next, in the case of new devices (CP and D), a user transmits the public key of the administrator (the first public key) to the new devices by using the smart card, for example by contacting the smart card with the new devices. In other words, when a new controlled device 200 is first brought into contact with the smart card, the first public key stored on the smart card is automatically stored to the controlled device 200. Meanwhile, when a new control point 100 is first brought into contact with the smart card, the public key (the first public key) is stored to the control point. Here, since a user transmits his/her public key (the first public key) by use of the smart card, the user can transmit the public key securely. As a result, it is possible to verify the validity of the digital signature as well as authenticate the security console in the next TakeOwnership processes.

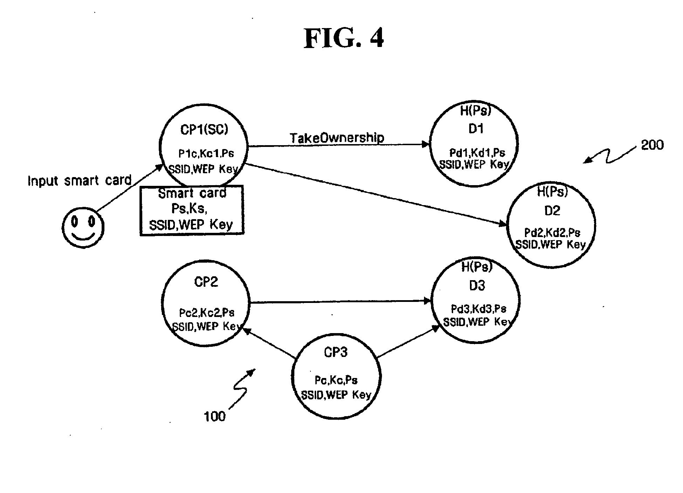

Figure 4 illustrates a switching process of a security console according to another exemplary embodiment of the present invention. First, when a user brings a smart card into contact with control point 100, the control point 100 requires a password from the user in order to read a private key encrypted and stored as a password of an administrator.

If the password input from user is valid, the private key stored on the smart card can be obtained. Further, the control point 100 creates a digital signature with random numbers by use of the private key. Here, the random numbers are randomly included in each message to prevent the messages from being used by stealth.

Next, the digital signature is verified by use of the public key (the first public key) stored in the initialization process. As a result, if the digital signature is valid, the control point 100 is switched into a security console, and if not, the control point 100 fails to be switched into the security console.

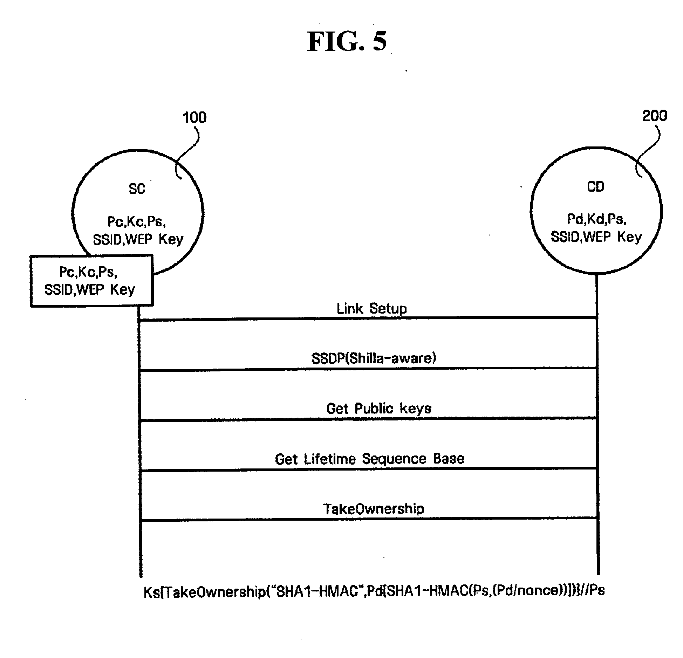

Figure 5 illustrates a process of authenticating and taking ownership according to a further exemplary embodiment of the present invention. The security console transmits the public key (the second public key) to the controlled device 200 together with its own digital signature so as to take ownership for the controlled device 200. The controlled device 200 determines whether the public key (the second public key) received from the security console is identical to the public key (the first public key) stored in the initialization process.

If both public keys are identical, the controlled device 200 verifies the transmitted digital signature by use of the public key. Then, if the digital signature is valid, the controlled device 200 calculates and stores a hash value for the public key. Further, the security console is allowed to access the controlled device 200. As a result, the security console has an authority to edit an ACL for the controlled device 200.

Meanwhile, if the two public keys are not identical, the security console cannot obtain access to the controlled device 200. Hence, the security console cannot have the authority to edit the ACL for the controlled device 200.

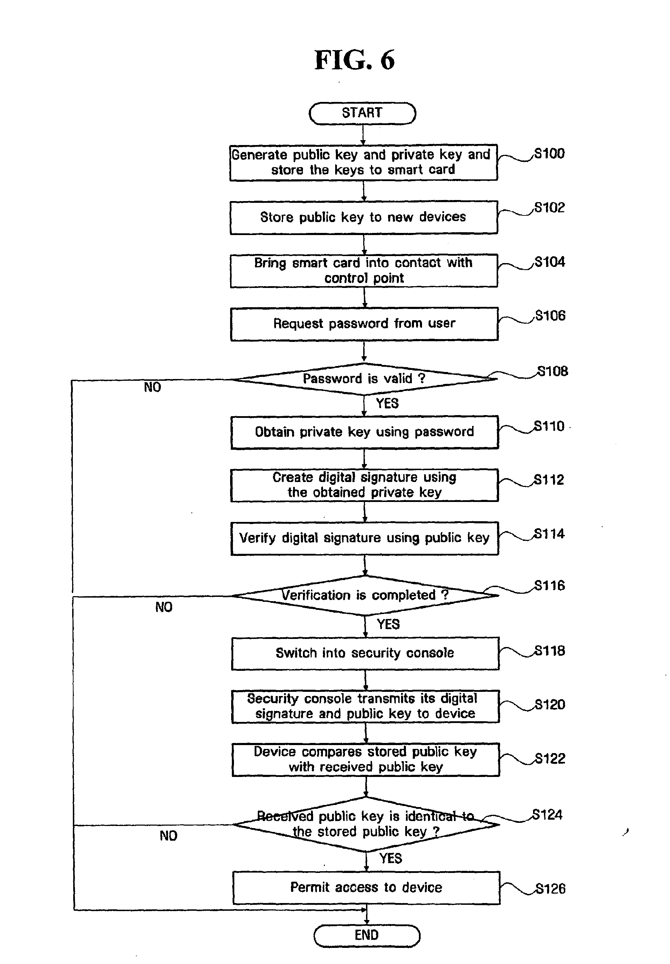

Figure 6 illustrates a method for automating a TakeOwnership process according to a still further exemplary embodiment of the present invention. A user who purchases at least one new device generates a public key and a private key by use of the public key generation unit 110 in order to automatically transmit security information as well as a public key pair within the home network, and writes the generated public key and private key on a storage medium (hereinafter, referred to as a "smart card") (step S100). Here, the private key is encrypted by a user's password, and the public and private keys are used in implementing certification of the user.

Next, the public key is stored to the new devices (control point and controlled device) by use of the smart card (step S102). Specifically, when the smart card is brought into contact with the control point 100, the storage medium write/read unit 120 reads the public key written on the smart card and stores the read public key on the public key storage unit 130. Also, when the smart card is brought into contact with the controlled device 200, the storage medium read unit 230 reads the public key written on the smart card and stores the read public key onto the public key storage unit 220.

When the smart card is first brought into contact with the control point 100 or the controlled device 200, the public key stored on the smart card is automatically stored to the control point 100 or the controlled device 200 contacted with the smart card. After the first contact, if the smart card is brought into contact with the control point 100 or the controlled device 200 again, it is required to switch the CP into the SC.

Next, when a user brings the smart card into contact with the control point 100, the control point 100 reads the smart card (step S104) and requests a password from the user in order to read the private key encrypted by the user's password (step S106).

When the user inputs the password, the control point 100 confirms whether the input password is valid. If the input password is valid, the control point 100 can obtain the private key stored on the smart card (step S108 and step S110); if not, the control point 100 cannot obtain the private key. Here, if the control point 100 does not obtain the private key, the switching process of CP/SC is terminated without further proceeding.

Next, the control point 100 creates a digital signature having random numbers by use of the private key (step S112). Here, the random numbers are included in each message made by the control point 100 to prevent the messages from being used by stealth.

The control point 100 verifies the digital signature by use of the stored public key (the first public key) (step S114). As a result, when the digital signature is valid, the control point 100 is switched into the security console. On the contrary, if the digital signature is not valid, the control point 100 fails to be switched into the security console (step S116).

If the control point 100 is switched into the security console, the security console transmits the digital signature and public key (the second public key) to the controlled device 200 so as to take ownership of the controlled device 200, wherein the ACL of the controlled device 200 can be edited (step S118 and step S120).

Next, the controlled device 200 determines whether the public key (the second public key) transmitted from the security console and the public key (the first public key) previously stored on the public key storage unit 220 are identical to each other. If the two public keys are identical, the controlled device 200 verifies the transmitted digital signature by use of the public key (step S122 and step S124).

Then, if the digital signature is valid, the controlled device 200 calculates and stores a hash value for the second public key. Further, the security console is allowed to access the controlled device (step S126). As a result, the security console has an authority to edit the ACL for the controlled device 200.

Meanwhile, if the two public keys are not identical, the security console cannot take ownership for the controlled device 200.

As apparent from the above description, the present invention enables the user to securely operate home network equipment by employing public key cryptography, which creates the digital signature by a private key stored on the smart card and verifies the digital signature by a public key.

Further, in the present invention, it is possible to automatically implement the TakeOwnership process by use of the public key.

In addition, in the present invention, it is not necessary to purchase an additional security console because the control point functions as the security console as well as the control point.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A network device for automating a TakeOwnership process, comprising:
a public key generation unit (110) operable to generate a public key and a private key by employing public key cryptography;
a storage medium write/read unit (120) operable to write the public and private keys on a storage medium and read the public and private keys written on the storage medium; and
a control point/security console CP/SC switching unit (150) operable to select one of a security console function and a control point function after authentication of a user using the private key stored on the storage medium, wherein the security console function provides an access authority for a predetermined device, and wherein the control point function controls operation of the predetermined device.

2. The network device of claim 1, further comprising a public key storage unit (130) operable to store the public key generated by the public key generation unit (110).

3. The network device of claim 1 or 2, further comprising a user authentication unit (140) operable to create a digital signature by use of the private key stored on the storage medium, and verify the digital signature by use of the public key stored on the storage medium.

4. The network device of claim 1, 2 or 3, wherein the storage medium is a smart card.

5. A network device for automating a TakeOwnership process, comprising:
a storage medium read unit (230) operable to read a first public key generated in a control point (100) from a storage medium;
a public key and digital signature authentication unit (210) operable to compare a second public key transmitted from the control point (100) with the first public key and if the first public key and the second public key are identical, authenticate a digital signature transmitted from the control point (100) using at least one of the first public key and the second public key and operable to permit the control point access to the network device.

6. The network device of claim 5, wherein the storage medium comprises a smart card.

7. A home network system for automating a TakeOwnership process, comprising:
a control point (100) operable to generate a public key and a private key and perform a security console function of providing an access authority for a controlled device (200) by use of the public key; and
the controlled device (200) operable to permit an access to the controlled device (200) after authentication by use of the public key.

8. The home network system of claim 7, wherein the control point (100) comprises:
a public key generation unit (110) operable to generate a public key and a private key by employing public key cryptography;
a storage medium write/read unit (120) operable to write the public and private keys on a storage medium and read the public and private keys written on the storage medium; and
a control point/security console CP/SC switching unit (150) operable to select one of a security console function and a control point function after authentication of a user using the private key stored on the storage medium, wherein the security console function provides an access authority for a predetermined device, and wherein the control point function controls operation of the predetermined device.

9. The home network system of claim 7 or 8, wherein the control point (100) further comprises a public key storage unit (130) operable to store the public key generated from the public key generation unit (110).

10. The home network system of claim 7, 8 or 9, wherein the control point (100) further comprises a user authentication unit (140) operable to create a digital signature by use of the private key stored on the storage medium, and verify the digital signature by use of the public key stored on the storage medium.

11. The home network system of any of claims 7 to 10, wherein the controlled device (200) comprises:
a storage medium read unit (230) operable to read a first public key from a storage medium on which the first public key generated by the control point (100) is stored; and
a public key and digital signature authentication unit (210) operable to compare a second public key transmitted from the control point (100) with the first public key and if the first public key and the second public key are identical, authenticate a digital signature transmitted from the control point (100) using at least one of the first public key and the second public key.

12. The home network system of any of claims 7 to 11, wherein the storage medium comprises a smart card.

13. A method for automating a TakeOwnership process, comprising:
a) at a control point (100), generating a public key and a private key and writing the public and private keys on a storage medium;
b) at the control point (100), reading the storage medium after the public key is transmitted to a controlled device (200);
c) authenticating a user using the private key stored on the storage medium; and
d) as a result of authentication, if the user is eligible, switching into a security console function.

14. The method of claim 13, wherein the step d) further includes:
determining whether a password input by the user is valid;
obtaining the private key stored on the storage medium if it is determined that the password is valid, creating a digital signature using the obtained private key; and
verifying the digital signature using the public key.

15. The method of claim 13 or 14, further comprising:
e) at the control point (100), transmitting a digital signature created by the private key and the public key stored on the storage medium to the controlled device (200); and
f) obtaining an access authority to the controlled device (200) according to a result of verifying the digital signature and the public key.

16. A method for automating a TakeOwnership process, comprising:
a) reading a storage medium storing a first public key generated by a control point (100) and storing the read result;
b) receiving a second public key and a digital signature from the control point (100);
c) verifying the second public key and digital signature; and
d) permitting an access to a controlled device (200) if the second public key and the digital signature are verified.

17. The method of claim 16, wherein the step c) further includes:
comparing the second public key with the first public key stored on the storage medium;
verifying validation of the digital signature using at least one of the first public key and the second public key, if it is determined that the first public key is identical to the second public key as a result of the comparison; and
calculating a hash value for at least one of the first public key and the second public key, if it is verified that the digital signature is valid.

## Patentansprüche

1. Netzwerkvorrichtung zum Automatisieren eines TakeOwnership-Prozesses, umfassend:
eine Einheit (110) zur Erzeugung eines öffentlichen Schlüssels, die betreibbar ist, um einen öffentlichen Schlüssel und einen privaten Schlüssel zu erzeugen durch Anwendung von Kryptographie mit öffentlichem Schlüssel;
eine Speichermedium-Schreib-/Leseeinheit (120), die betreibbar ist, um den öffentlichen und den privaten Schlüssel auf ein Speichermedium zu schreiben und um den öffentlichen und den privaten Schlüssel, die auf das Speichermedium geschrieben sind, zu lesen; und
eine Steuerungspunkt-/Sicherheitskonsolen-SP/SK-Umschalteinheit (150), die betreibbar ist, um eine von einer Sicherheitskonsolenfunktion und einer Steuerungspunktfunktion auszuwählen nach Authentifizierung eines Benutzers mittels des auf dem Speichermedium gespeicherten privaten Schlüssels, wobei die Sicherheitskonsolenfunktion eine Zugriffsberechtigung für eine vorgegebene Vorrichtung verschafft, und wobei die Steuerungspunktfunktion den Betrieb der vorgegebenen Vorrichtung steuert.

2. Netzwerkvorrichtung nach Anspruch 1, die weiterhin eine Einheit (130) zur Speicherung eines öffentlichen Schlüssels umfasst, die betreibbar ist, um den von der Einheit (110) zur Erzeugung eines öffentlichen Schlüssels erzeugten öffentlichen Schlüssel zu speichern.

3. Netzwerkvorrichtung nach Anspruch 1 oder 2, die weiterhin eine Benutzerauthentifizierungseinheit (140) umfasst, die betreibbar ist, um eine digitale Signatur zu erstellen durch Verwendung des auf dem Speichermedium gespeicherten privaten Schlüssels, und um die digitale Signatur zu verifizieren durch Verwendung des auf dem Speichermedium gespeicherten öffentlichen Schlüssels.

4. Netzwerkvorrichtung nach Anspruch 1, 2 oder 3, wobei das Speichermedium eine Smartcard ist.

5. Netzwerkvorrichtung zum Automatisieren eines TakeOwnership-Prozesses, umfassend:
eine Speichermediumleseeinheit (230), die betreibbar ist, um einen in einem Steuerungspunkt (100) erzeugten ersten öffentlichen Schlüssel aus einem Speichermedium zu lesen;
eine Öffentlicher-Schlüssel-und-digitale-Signatur-Authentifizierungseinheit (210), die betreibbar ist, um einen aus dem Steuerungspunkt (100) übertragenen zweiten öffentlichen Schlüssel mit dem ersten öffentlichen Schlüssel zu vergleichen, und um, falls der erste öffentliche Schlüssel und der zweite öffentliche Schlüssel identisch sind, eine aus dem Steuerungspunkt (100) übertragene digitale Signatur mittels zumindest eines von dem ersten öffentlichen Schlüssel und dem zweiten öffentlichen Schlüssel zu authentifizieren, und die betreibbar ist, um dem Steuerungspunkt Zugriff auf die Netzwerkvorrichtung zu gestatten.

6. Netzwerkvorrichtung nach Anspruch 5, wobei das Speichermedium eine Smartcard umfasst.

7. Heimnetzwerksystem zum Automatisieren eines TakeOwnership-Prozesses, umfassend:
einen Steuerungspunkt (100), der betreibbar ist, um einen öffentlichen Schlüssel und einen privaten Schlüssel zu erzeugen und um eine Sicherheitskonsolenfunktion zum Verschaffen einer Zugriffsberechtigung für eine gesteuerte Vorrichtung (200) durch Verwendung des öffentlichen Schlüssels auszuüben; und
die gesteuerte Vorrichtung (200), die betreibbar ist, um einen Zugriff auf die gesteuerte Vorrichtung (200) zu gestatten nach Authentifizierung durch Verwendung des öffentlichen Schlüssels.

8. Heimnetzwerksystem nach Anspruch 7, wobei der Steuerungspunkt (100) umfasst:
eine Einheit (110) zur Erzeugung eines öffentlichen Schlüssels, die betreibbar ist, um einen öffentlichen Schlüssel und einen privaten Schlüssel zu erzeugen durch Anwendung von Kryptographie mit öffentlichem Schlüssel;
eine Speichermedium-Schreib-/Leseeinheit (120), die betreibbar ist, um den öffentlichen und den privaten Schlüssel auf ein Speichermedium zu schreiben und um den öffentlichen und den privaten Schlüssel, die auf das Speichermedium geschrieben sind, zu lesen; und
eine Steuerungspunkt-/Sicherheitskonsolen-SP/SK-Umschalteinheit (150), die betreibbar ist, um eine von einer Sicherheitskonsolenfunktion und einer Steuerungspunktfunktion auszuwählen nach Authentifizierung eines Benutzers mittels des auf dem Speichermedium gespeicherten privaten Schlüssels, wobei die Sicherheitskonsolenfunktion eine Zugriffsberechtigung für eine vorgegebene Vorrichtung verschafft, und wobei die Steuerungspunktfunktion den Betrieb der vorgegebenen Vorrichtung steuert.

9. Heimnetzwerksystem nach Anspruch 7 oder 8, wobei der Steuerungspunkt (100) weiterhin eine Einheit (130) zur Speicherung eines öffentlichen Schlüssels umfasst, die betreibbar ist, um den von der Einheit (110) zur Erzeugung eines öffentlichen Schlüssels erzeugten öffentlichen Schlüssel zu speichern.

10. Heimnetzwerksystem nach Anspruch 7, 8 oder 9, wobei der Steuerungspunkt (100) weiterhin eine Benutzerauthentifizierungseinheit (140) umfasst, die betreibbar ist, um eine digitale Signatur zu erstellen durch Verwendung des auf dem Speichermedium gespeicherten privaten Schlüssels, und um die digitale Signatur zu verifizieren durch Verwendung des auf dem Speichermedium gespeicherten öffentlichen Schlüssels.

11. Heimnetzwerksystem nach einem der Ansprüche 7 bis 10, wobei die gesteuerte Vorrichtung (200) umfasst:
eine Speichermediumleseeinheit (230), die betreibbar ist, um einen ersten öffentlichen Schlüssel aus einem Speichermedium zu lesen, auf dem der vom Steuerungspunkt (100) erzeugte erste öffentliche Schlüssel gespeichert ist; und
eine Öffentlicher-Schlüssel-und-digitale-Signatur-Authentifizierungseinheit (210), die betreibbar ist, um einen aus dem Steuerungspunkt (100) übertragenen zweiten öffentlichen Schlüssel mit dem ersten öffentlichen Schlüssel zu vergleichen, und um, falls der erste öffentliche Schlüssel und der zweite öffentliche Schlüssel identisch sind, eine aus dem Steuerungspunkt (100) übertragene digitale Signatur mittels zumindest eines von dem ersten öffentlichen Schlüssel und dem zweiten öffentlichen Schlüssel zu authentifizieren.

12. Heimnetzwerksystem nach einem der Ansprüche 7 bis 11, wobei das Speichermedium eine Smartcard umfasst.

13. Verfahren zum Automatisieren eines TakeOwnership-Prozesses, umfassend:
a) an einem Steuerungspunkt (100), Erzeugen eines öffentlichen Schlüssels und eines privaten Schlüssels, und Schreiben des öffentlichen und des privaten Schlüssels auf ein Speichermedium;
b) am Steuerungspunkt (100), Lesen des Speichermediums, nachdem der öffentliche Schlüssel an eine gesteuerte Vorrichtung (200) übertragen worden ist;
c) Authentifizieren eines Benutzers mittels des auf dem Speichermedium gespeicherten privaten Schlüssels; und
d) falls, als Authentifizierungsergebnis, der Benutzer berechtigt ist, Umschalten zu einer Sicherheitskonsolenfunktion.

14. Verfahren nach Anspruch 13, wobei Schritt d) weiterhin einschließt:
Feststellen, ob ein vom Benutzer eingegebenes Passwort gültig ist;
Erhalten des auf dem Speichermedium gespeicherten privaten Schlüssels, falls festgestellt wird, dass das Passwort gültig ist, Erstellen einer digitalen Signatur mittels des erhaltenen privaten Schlüssels; und
Verifizieren der digitalen Signatur mittels des öffentlichen Schlüssels.

15. Verfahren nach Anspruch 13 oder 14, das weiterhin umfasst:
e) am Steuerungspunkt (100), Übertragen einer durch den privaten Schlüssel erstellten digitalen Signatur und des auf dem Speichermedium gespeicherten öffentlichen Schlüssels an die gesteuerte Vorrichtung (200); und
f) Erhalten einer Zugriffsberechtigung für die gesteuerte Vorrichtung (200) in Übereinstimmung mit einem Ergebnis des Verifizierens der digitalen Signatur und des öffentlichen Schlüssels.

16. Verfahren zum Automatisieren eines TakeOwnership-Prozesses, umfassend:
a) Lesen eines Speichermediums, das einen von einem Steuerungspunkt (100) erzeugten ersten öffentlichen Schlüssel speichert, und Speichern des gelesenen Ergebnisses;
b) Empfangen eines zweiten öffentlichen Schlüssels und einer digitalen Signatur aus dem Steuerungspunkt (100);
c) Verifizieren des zweiten öffentlichen Schlüssels und der digitalen Signatur; und
d) Gestatten eines Zugriffs auf eine gesteuerte Vorrichtung (200), falls der zweite öffentliche Schlüssel und die digitale Signatur verifiziert sind.

17. Verfahren nach Anspruch 16, wobei Schritt c) weiterhin einschließt:
Vergleichen des zweiten öffentlichen Schlüssels mit dem auf dem Speichermedium gespeicherten ersten öffentlichen Schlüssel;
Verifizieren der Gültigkeit der digitalen Signatur mittels zumindest eines von dem ersten öffentlichen Schlüssel und dem zweiten öffentlichen Schlüssel, falls als Ergebnis des Vergleichs festgestellt wird, dass der erste öffentliche Schlüssel mit dem zweiten öffentlichen Schlüssel identisch ist; und
Berechnen eines Hashwerts für zumindest einen von dem ersten öffentlichen Schlüssel und dem zweiten öffentlichen Schlüssel, falls verifiziert ist, dass die digitale Signatur gültig ist.

## Revendications

1. Dispositif de réseau permettant d'automatiser une procédure TakeOwnership, comprenant :
une unité de génération de clé publique (110) servant à générer une clé publique et une clé privée en faisant appel à la cryptographie à clé publique ;
une unité d'écriture/lecture sur support d'enregistrement (120) servant à écrire les clés publique et privée sur un support d'enregistrement et à lire les clés publique et privée écrites sur le support d'enregistrement ; et
une unité de commutation point de commande/console de sécurité CP/SC (150) servant à sélectionner une fonction parmi une fonction de console de sécurité et une fonction de point de commande après authentification d'un utilisateur au moyen de la clé privée enregistrée sur le support d'enregistrement, la fonction de console de sécurité fournissant une autorisation d'accès pour un appareil prédéterminé, et la fonction de point de commande commandant le fonctionnement de l'appareil prédéterminé.

2. Dispositif de réseau selon la revendication 1, comprenant en outre une unité d'enregistrement de clé publique (130) servant à enregistrer la clé publique générée par l'unité de génération de clé publique (110).

3. Dispositif de réseau selon la revendication 1 ou 2, comprenant en outre une unité d'authentification d'utilisateur (140) servant à créer une signature numérique au moyen de la clé privée enregistrée sur le support d'enregistrement, et à vérifier la signature numérique au moyen de la clé publique enregistrée sur le support d'enregistrement.

4. Dispositif de réseau selon la revendication 1, 2 ou 3, dans lequel le support d'enregistrement est une carte à puce.

5. Dispositif de réseau permettant d'automatiser une procédure TakeOwnership, comprenant :
une unité de lecture de support d'enregistrement (230) servant à lire une première clé publique générée dans un point de commande (100) à partir d'un support d`enregistrement ; et
une unité d'authentification de clé publique et de signature numérique (210) servant à comparer une seconde clé publique transmise par le point de commande (100) avec la première clé publique et, si la première clé publique et la seconde clé publique sont identiques, à authentifier une signature numérique transmise par le point de commande (100) en utilisant la première clé publique et/ou la seconde clé publique et servant à permettre au point de commande à accéder au dispositif de réseau.

6. Dispositif de réseau selon la revendication 5, dans lequel le support d'enregistrement comprend une carte à puce.

7. Système de réseau domestique permettant d'automatiser une procédure TakeOwnership, comprenant :
un point de commande (100) servant à générer une clé publique et une clé privée et à réaliser une fonction de console de sécurité visant à fournir une autorisation d'accès pour un appareil commandé (200) au moyen de la clé publique ; et
l'appareil commandé (200) servant à permettre un accès à l'appareil commandé (200) après authentification au moyen de la clé publique.

8. Système de réseau domestique selon la revendication 7, dans lequel le point de commande (100) comprend :
une unité de génération de clé publique (110) servant à générer une clé publique et une clé privée en faisant appel à la cryptographie à clé publique ;
une unité d'écriture/lecture sur support d'enregistrement (120) servant à écrire les clés publique et privée sur un support d'enregistrement et à lire les clés publique et privée écrites sur le support d'enregistrement ; et
une unité de commutation point de commande/console de sécurité CP/SC (150) servant à sélectionner une fonction parmi une fonction de console de sécurité et une fonction de point de commande après authentification d'un utilisateur au moyen de la clé privée enregistrée sur le support d'enregistrement, la fonction de console de sécurité fournissant une autorisation d'accès pour un appareil prédéterminé, et la fonction de point de commande commandant le fonctionnement de l'appareil prédéterminé.

9. Système de réseau domestique selon la revendication 7 ou 8, dans lequel le point de commande (100) comprend en outre une unité d'enregistrement de clé publique (130) servant à enregistrer la clé publique générée à partir de l'unité de génération de clé publique (110).

10. Système de réseau domestique selon la revendication 7, 8 ou 9, dans lequel le point de commande (100) comprend en outre une unité d'authentification d'utilisateur (140) servant à créer une signature numérique au moyen de la clé privée enregistrée sur le support d'enregistrement, et à vérifier la signature numérique au moyen de la clé publique enregistrée sur le support d'enregistrement.

11. Système de réseau domestique selon l'une quelconque des revendications 7 à 10, dans lequel l'appareil commandé (200) comprend :
une unité de lecture de support d'enregistrement (230) servant à lire une première clé publique à partir d'un support d'enregistrement sur lequel la première clé publique générée par le point de commande (100) est enregistrée ; et
une unité d'authentification de clé publique et de signature numérique (210) servant à comparer une seconde clé publique transmise par le point de commande (100) avec la première clé publique et, si la première clé publique et la seconde clé publique sont identiques, à authentifier une signature numérique transmise par le point de commande (100) en utilisant la première clé publique et/ou la seconde clé publique.

12. Système de réseau domestique selon l'une quelconque des revendications 7 à 11, dans lequel le support d'enregistrement comprend une carte à puce.

13. Procédé permettant d'automatiser une procédure TakeOwnership, comprenant :
a) au niveau d'un point de commande (100), la génération d'une clé publique et d'une clé privée et l'écriture des clés publique et privée sur un support d'enregistrement;
b) au niveau du point de commande (100), la lecture du support d'enregistrement après la transmission de la clé publique auprès d'un appareil commandé (200) ;
c) l'authentification d'un utilisateur en utilisant la clé privée enregistrée sur le support d'enregistrement ; et
d) en conséquence de l'authentification, si l'utilisateur est éligible, la commutation à une fonction de console de sécurité.

14. Procédé selon la revendication 13, dans lequel l'étape d) comprend en outre :
la détermination du fait qu'un mot de passe saisi par l'utilisateur est valide ou non ;
l'obtention de la clé privée enregistrée sur le support d'enregistrement s'il a été déterminé que le mot de passe est valide, en créant une signature numérique en utilisant la clé privée obtenue ; et
la vérification de la signature numérique en utilisant la clé publique.

15. Procédé selon la revendication 13 ou 14, comprenant en outre :
e) au niveau du point de commande (100), la transmission d'une signature numérique créée par la clé privée et la clé publique enregistrées sur le support d'enregistrement pour l'appareil commandé (200) ; et
f) l'obtention d'une autorisation d'accès à l'appareil commandé (200) conformément à un résultat de vérification de la signature numérique et de la clé publique.

16. Procédé permettant d'automatiser une procédure TakeOwnership, comprenant :
a) la lecture d'un support d'enregistrement portant l'enregistrement d'une première clé publique générée par un point de commande (100) et du résultat de la lecture ;
b) la réception d'une seconde clé publique et d'une signature numérique en provenance du point de commande (100) ;
c) la vérification de la seconde clé publique et de la signature numérique ; et
d) la permission d'un accès à un appareil commandé (200) si la seconde clé publique et la signature numérique sont vérifiées.

17. Procédé selon la revendication 16, dans lequel l'étape c) comprend en outre :
la comparaison de la seconde clé publique avec la première clé publique enregistrée sur le support d'enregistrement ;
la vérification de la validation de la signature numérique en utilisant la première clé publique et/ou la seconde clé publique, s'il a été déterminé que la première clé publique est identique à la seconde clé publique en conséquence la comparaison ; et
le calcul d'une valeur de hachage pour la première clé publique et/ou la seconde clé publique, s'il a s'est vérifié que la signature numérique est valide.
